# FASCICULE DE BREVET EUROPEEN

(11) **EP 0 404 673 B1**
(45) Date de publication et mention de la délivrance du brevet: **22.12.1993**
(21) Numéro de dépôt: 90401743.1
(22) Date de dépôt: 20.06.1990
(51) Int. Cl.: G01L 9/00, G01L 9/04

(54) **Capteur à membrane à concentration de déformations**
Membranmessfühler mit Konzentration von Deformationen
Membrane sensor with concentration of deformations

(30) Priorité: 21.06.1989 FR 8908292
(43) Date de publication de la demande: 27.12.1990
(73) Titulaire: SOCIETE EUROPEENNE DE PROPULSION, 92150 Suresnes (FR)
(72) Inventeur: Bellec, Gérard, F-33160 Saint Medard en Jalles (FR); Goutti, René, F-33320 Le Taillan Medoc (FR)
(74) Mandataire: Joly, Jean-Jacques

(56) Documents cités:
- DD-A- 211 174
- DE-B- 2 263 901
- DE-B- 2 608 381
- DE-C- 1 252 439
- GB-A- 1 155 286

## Description

La présente invention concerne un capteur, notamment un capteur de pression à membrane à concentration de déformations.

Pour la mesure de pressions relativement élevées, il est connu d'utiliser des capteurs haute pression principalement constitués d'une membrane déformable sensible à la pression équipée de jauges extensométriques, comme décrit par exemple dans les documents FR-A-2 587 485, FR-A-2 594 224 et FR-A-2 594 546. Les jauges extensométriques fixées sur la membrane peuvent être au nombre de quatre montées en pont.

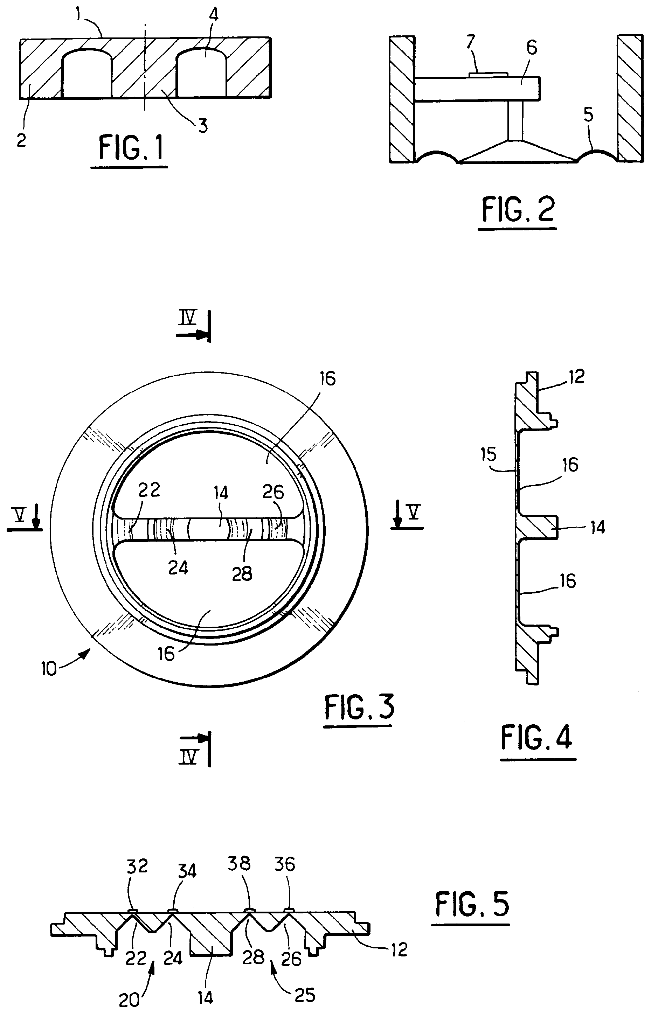

La membrane peut être de forme plus ou moins complexe, de la simple membrane plate à la membrane présentant un renfort central. Ainsi, la figure 1 montre une membrane 1, munie d'un rebord périphérique 2 et d'un renfort central 3, formant une gorge annulaire 4 dans laquelle sont localisées les contraintes.

Un tel capteur est inadapté à la mesure des basses pressions, par exemple inférieure à 20 bars. En effet, l'épaisseur de la membrane, généralement en acier, dans la gorge 4 ne peut raisonnablement être inférieure à 0,1 mm. Pour des valeurs aussi faibles, les variations inévitables d'épaisseur venant de la fabrication ont pour conséquence une incertitude relativement élevée sur la sensibilité du capteur et une grande marge d'erreur sur la mesure. En outre, les membranes fines ont tendance à être instables et peuvent présenter une déformation non élastique en certains points.

Aussi, pour la mesure de basses pressions, il a été proposé d'utiliser des capteurs tels que celui illustré par la figure 2 dans lesquels la membrane souple 5 est associée à une poutre 6 qui détecte les efforts transmis par la membrane et sur laquelle sont fixées les jauges d'extensométrie 7. La membrane 5 est en acier de faible épaisseur pour que sa raideur soit la plus faible possible afin de transmettre à la poutre 6 la plus grande partie de l'effort développé.

De tels capteurs basse pression sont donc globalement constitués de deux sous-ensembles plus ou moins complexes. Cette architecture est sujette à de nombreux aléas de montage se répercutant sur les performances du capteur.

Il est connu également du document DE-A-2 263 901 un capteur dans lequel la membrane et la poutre sont réalisées en une seule pièce dans laquelle la partie formant poutre présente une épaisseur notablement supérieure à celle de la partie formant membrane et s'étend entre deux zones périphériques opposées de cette dernière.

La présente invention a pour but de fournir un capteur, notamment un capteur de pression, permettant de mesurer avec précision et fidélité des grandeurs de relativement faible amplitude, et capable de donner une réponse linéaire, tout en présentant une structure simple.

Ce but est atteint au moyen d'un capteur du type comprenant une membrane et une poutre réalisées en une seule pièce, et des jauges fixées à la poutre pour fournir un signal représentatif des contraintes exercées sur la poutre, capteur dans lequel, conformément à l'invention : des évidements sont formés dans l'épaisseur de la poutre à partir d'une face de celle-ci, chaque évidement comprenant deux gorges ou entailles à profil en V qui donnent à l'évidemment sur toute la largeur de la poutre un profil genéral en W et dont les fonds constituent deux zones de concentration de contraintes respectivement en traction et en compression, et en ce que les jauges sont disposées au niveau des fonds des gorges, sur une face opposée à celle dans laquelle les évidements sont formés.

La réalisation de la membrane et de la poutre en une seule pièce permet de résoudre très simplement les problèmes de montage de l'élément sensible du capteur.

La formation de gorges ou entailles dans la poutre permet de définir des zones de concentration de contraintes de très petites dimensions. De ce fait, la poutre peut être suffisamment raide pour ne pas imposer à la membrane, qui constitue l'élément moteur, une flèche importante, principale cause de non-linéarité du système.

De préférence, les gorges ou entailles forment deux paires disposées en des emplacements symétriques l'un de l'autre par rapport au milieu de la poutre. Au fond de deux gorges d'une paire, sont formées deux zones de concentration de contraintes, l'une travaillant en traction et l'autre en compression, et les jauges d'extensométrie disposées au niveau des fonds des quatre gorges sont montées en pont.

D'autres particularités et avantages du capteur conforme à l'invention ressortiront à la lecture de la description faite ci-après, à titre indicatif mais non limitatif, en référence aux dessins annexés sur lesquels :
- les figures 1 et 2, déjà décrites, illustrent des éléments sensibles de capteurs de pression de l'art antérieur,
- la figure 3 est une vue en plan d'un premier mode de réalisation d'un élément sensible de capteur conforme à l'invention,
- les figures 4 et 5 sont des vues en coupe suivant les plans IV-IV et V-V de la figure 3,
- la figure 6 est une vue en coupe à échelle agrandie montrant le profil à double gorge d'un évidement formé dans la poutre du capteur de la figure 3,
- la figure 7 montre la variation d'amplitude des contraintes le long d'un évidement de la poutre de l'élément sensible de la figure 3,
- la figure 8 est une vue en plan d'un deuxième mode de réalisation d'un élément sensible de capteur conforme à l'invention, et
- les figures 9 à 11 sont des vues en coupe suivant les plans IX-IX, X-X et XI-XI de la figure 8.

Un mode de réalisation d'un élément sensible de capteur selon l'invention est illustré par les figures 3 à 5.

Cet élément sensible en forme de disque 10 est réalisé en une seule pièce et comprend une partie périphérique annulaire 12 formant rebord destinée à l'encastrement de l'élément sensible dans le corps du capteur, par exemple un capteur de pression, une partie épaisse en forme de poutre 14 s'étendant diamétralement entre deux zones opposées du rebord périphérique 12, d'un côté du disque 10, et une partie de faible épaisseur formant membrane 16. La membrane 16 est en fait constituée de deux parties sensiblement en forme de demi-cercle situées de part et d'autre de la poutre 14 et délimitées par celle-ci et le rebord périphérique 12.

L'élément sensible 10 est en acier et est réalisé par usinage. A titre indicatif, l'épaisseur de la membrane 16 est inférieure à 0,3 mm par exemple environ égale à 0,15 mm, tandis que l'épaisseur de la poutre peut dépasser 2 mm, par exemple être environ égale à 3 mm.

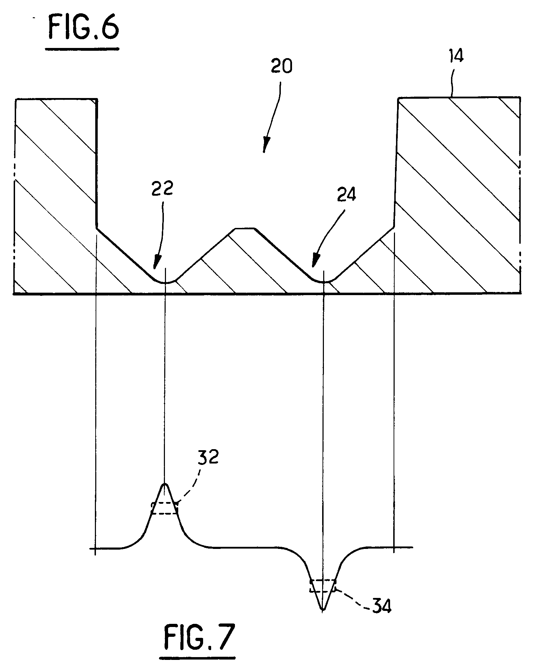

Deux évidements 20, 25 sont formés dans la poutre 14, à partir de sa face externe 15. Les évidements 20 et 25 sont symétriques l'un de l'autre par rapport au milieu de la poutre. Chaque évidement 20, 25 est formé sur toute la largeur de la poutre, perpendiculairement à la direction longitudinale de celle-ci, et se termine par deux gorges, respectivement 22, 24 et 26, 28, situées côte à côte dans le sens de la longueur de la poutre. Au moins dans son fond, chaque gorge est à profil en V, ce qui donne à chaque évidement un profil général en W. La figure 6 illustre de façon plus détaillée l'un (20) des évidements. A titre indicatif, au milieu de chaque gorge 22, 24, 26, 28, dans sa partie la plus mince, la poutre 14 a une épaisseur qui peut être inférieure à 0,3 mm, par exemple environ égale à 0,2 mm. Des jauges d'extensométrie 32, 34, 36, 38 sont situées au niveau des fonds des gorges 22, 24, 26, 28, respectivement. Les jauges sont fixées sur la surface du disque 10 opposée à celle où se trouve la poutre 14.

Lorsque l'élément sensible 10 est monté dans le corps du capteur, une pression exercée sur l'élément sensible 10, du côté où se trouve la poutre 14, provoque une déformation de la membrane 16 qui induit des efforts sur la poutre 14. Les contraintes exercées sur la poutre 14 se concentrent dans les parties les plus minces de celle-ci, au niveau des fonds des gorges 22, 24, 26, 28. Les parties de fond des gorges 22, 26, qui sont les plus proches des extrémités de la poutre 14, sont sollicitées en traction, tandis que les parties de fond des gorges 24, 28, qui sont les plus proches du milieu de la poutre, sont sollicitées en compression comme cela est illustré par la figure 7. Les emplacements des jauges d'extensométrie sont choisis pour correspondre aux maxima des contraintes, comme montré en tirets sur la figure 7.

Avantageusement, les jauges d'extensométrie sont réalisées, de façon connue en soi, en utilisant la technologie en couches minces, ce qui permet de leur conférer des dimensions réduites.

De façon connue en soi, les jauges 32, 34, 36, 38 sont avantageusement montées en pont.

La structure qui vient d'être décrite permet, dans une large plage, d'obtenir une réponse globale sensiblement linéaire. En effet, la forte concentration des contraintes produites par les gorges formées dans la poutre permet de conserver une poutre suffisamment raide pour ne pas imposer une amplitude importante de déformation de la membrane qui serait source de non-linéarité.

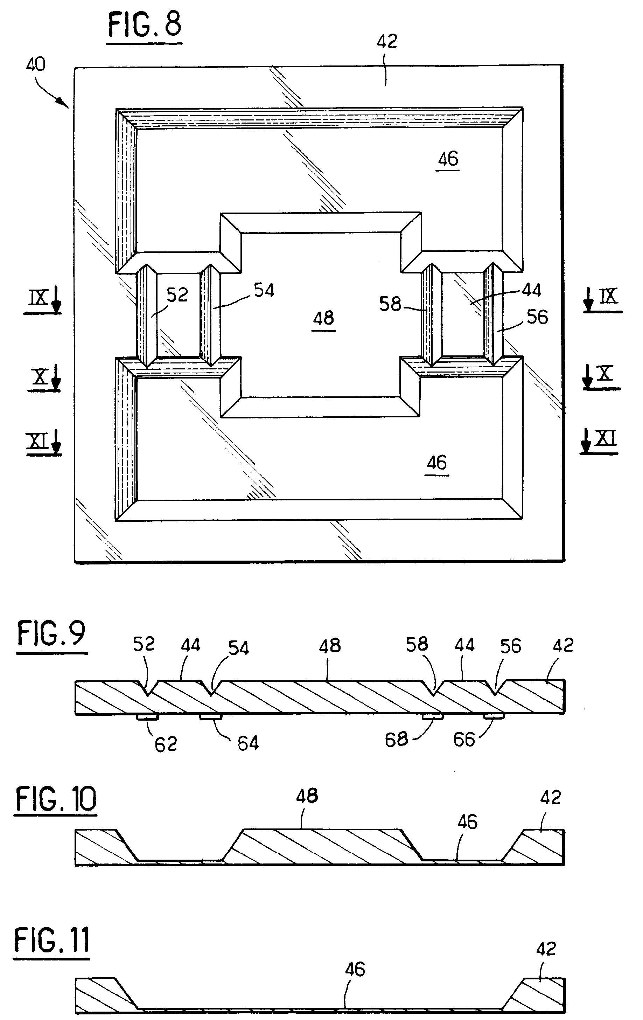

Les figures 8 à 11 illustrent un autre mode de réalisation d'un élément sensible 40 pour un capteur conforme à l'invention.

L'élément sensible 40 a une forme générale carrée, avec une partie périphérique 42 formant rebord et destinée à l'encastrement de l'élément sensible dans le corps du capteur, une partie médiane épaisse formant poutre 44 qui s'étend entre deux côtés opposés du rebord 42 et une partie de faible épaisseur formant membrane 46. La poutre 44 présente en son milieu une partie de plus grande largeur formant poussoir 48. La membrane est en fait constituée de deux parties situées de part et d'autre de la poutre 44 et délimitées par le rebord 42.

Des entailles 52, 54, 56 et 58 sont formées dans la poutre 44. Les entailles 52, 54 constituent une paire disposée symétriquement de la paire d'entailles 56, 58 par rapport au milieu de la poutre. Les entailles sont formées dans les parties de moindre largeur de la poutre 44, c'est-à-dire entre le poussoir 48 et les extrémités de la poutre. Comme le montre la figure 9, chaque entaille a un profil en V et s'étend sur toute la largeur de la poutre, transversalement par rapport à celle-ci. Des jauges extensométriques 62, 64, 66 et 68 montées en pont sont disposées au niveau des fonds des entailles 52, 54, 56 et 58, respectivement, du côté de l'élément sensible 40 opposé à celui où se trouve la poutre.

Comme dans le cas du premier mode de réalisation décrit, les entailles 52, 54, 56 et 58 définissent des zones de concentration de contraintes où la poutre, dans ses parties amincies, est sollicitée en traction ou en compression. Le poussoir 48 contribue à améliorer la transmission des efforts entre la membrane 46 et la poutre 44. Egalement comme dans le cas précédent, la formation des entailles assure une concentration des contraintes telle que la poutre peut être relativement rigide et que la flèche imposée à la membrane peut être réduite, ce qui permet de fournir une réponse linéaire.

L'élément sensible 40 avec le rebord 42, la poutre 44, la membrane 46 et le poussoir 48 est réalisé en une seule pièce par exemple en silicium. Dans ce cas, les parties amincies constituant la membrane peuvent être obtenues par enlèvement de matière par attaque chimique au moyen des procédés habituellement utilisés dans la technologie des semiconducteurs.

Les modes de réalisation décrits ci-avant se rapportent à des capteurs de pression. Toutefois, l'invention n'est pas limitée à la mesure de pression et peut être utilisée pour mesurer d'autres grandeurs comme, par exemple, des accélérations, susceptibles de provoquer des déformations de l'élément sensible.

En outre, on pourra conférer à l'élément sensible une forme générale autre que circulaire ou carrée, par exemple une forme polygonale, présentant au moins un axe de symétrie le long duquel s'étend la poutre.

## Revendications

1. Capteur comprenant une membrane (16) déformable sous l'effet d'une grandeur à mesurer ; une poutre (14) reliée à la membrane pour détecter les efforts transmis par la membrane, la membrane (16) et la poutre (14) étant réalisées en une seule pièce (10) dans laquelle la partie formant poutre présente une épaisseur notablement supérieure à celle de la partie formant membrane et s'étend entre deux zones périphériques opposées de cette dernière ; et des jauges (32, 34, 36, 38 ; 62, 64, 66, 68) fixées à la poutre pour fournir un signal représentatif des contraintes exercées sur la poutre,
caractérisé en ce que des évidements (20, 25) sont formés dans L'épaisseur de la poutre à partir d'une face de celle-ci, chaque évidement comprenant deux gorges ou entailles (22, 24, 26, 28; 52, 54, 56, 58) à profil en V qui donnent à l'évidemment sur toute la largeur de la poutre un profil général en W et dont les fonds constituent deux zones de concentration de contraintes respectivement en traction et en compression, et en ce que les jauges (32, 34, 36, 38 ; 62, 64, 66, 68) sont disposées au niveau des fonds des gorges, sur une face opposée à celle dans laquelle les évidements sont formés.

2. Capteur selon la revendication 1, caractérisé en ce qu'il comprend deux paires de jauges extensométriques (32-34, 36-38 ; 62-64, 66-68) disposées symétriquement l'une de l'autre par rapport au milieu de la poutre et montées en pont.

3. Capteur selon l'une quelconque des revendications 1 et 2, caractérisé en ce que la membrane et la poutre sont réalisées en une seule pièce en silicium.

## Patentansprüche

1. Meßfühler, bestehend aus einer Membran (16), die unter der Wirkung einer Meßgröße verformbar ist, einem Balken (14), der mit der Membran verbunden ist, um die von der Membran übertragenen Kräfte zu detektieren, wobei die Membran (16) und der Balken (14) in Form eines einzigen Elements (10) ausgebildet sind, bei dem der Teil, der den Balken bildet, eine Dicke hat, die wesentlich größer als die des Teils ist, der die Membran bildet und sich zwischen zwei gegenüberliegenden Umfangszonen der letzteren erstreckt, sowie Meßstreifen (32, 34, 36, 38; 62, 64, 66, 68), die am Balken befestigt sind, um ein die auf den Balken ausgeübten Kräfte darstellendes Signal zu liefern, dadurch gekennzeichnet, daß Ausnehmungen (20, 25) in der Dicke des Balkens ausgehend von einer Außenseite hiervon ausgebildet sind, wobei jede Ausnehmung zwei Kerben (22, 24, 26, 28; 52, 54, 56, 58) mit einem V-förmigen Profil hat, die der Ausnehmung über die gesamte Breite des Balkens ein etwa W-förmiges Profil verleihen und deren Gründen zwei Zonen zur Konzentration der Zug- bzw. Druckkräfte bilden, und daß die Meßstreifen (32, 34, 36, 38; 62, 64, 66, 68) im Bereich der Böden der Kerben auf einer Außenseite angeordnet sind, die zu der entgegengesetzt ist, in der die Ausnehmungen ausgebildet sind.

2. Meßfühler nach Anspruch 1, gekennzeichnet durch zwei Paare von extensometrischen Meßstreifen (32-34, 36-38; 62-64, 66-68), die bezüglich der Mitte des Balkens zueinander symmetrisch angeordnet und als Brücke geschaltet sind.

3. Meßfühler nach den Ansprüchen 1 und 2, dadurch gekennzeichnet, daß die Membran und der Balken aus einem einzigen Element aus Silicium ausgebildet sind.

## Claims

1. Transducer comprising a membrane (16) that is deformable under the effect of a magnitude to be measured; a beam (14) joined to the membrane to detect stresses transmitted by the membrane, said membrane (16) and said beam (14) being formed as one element (10) in which a part forming the beam has a thickness substantially greater than a part forming the membrane and extends between two oppositely lying peripheral zones of said membrane; and strain gauges (32, 34, 36, 38; 62, 64, 66, 68) affixed to the beam to produce a signal indicative of strains suffered by the beam,
charaterized in that depressed portions (20, 25) are formed in the thickness of the beam from a face thereof, each depressed portion comprising two V-shaped grooves or notches (22, 24, 26, 28; 52, 54, 56, 58) which gives, throughout the width of the beam, a generally W-shaped profile to the depressed portion whose bottom portions constitute two strain concentration zones in traction and in compression, respectively, and in that the strain gauges (32, 34, 36, 38; 62, 64, 66, 68) are disposed in the region at the bottom of the grooves, on a face opposite to that in which the depressed portions are formed.

2. Transducer according to claim 1, characterized in that it comprises two pairs of wire strain gauges (32-34, 36-38; 62-64, 66-68) disposed symmetrically with respect to each other about the center of the beam and forming a bridge network.

3. Transducer according to any one of claims 1 and 2, characterized in that the membrane and the beam are made from a single piece of silicon.
